# EUROPEAN PATENT SPECIFICATION

(11) **EP 3 779 842 B1**
(45) Date of publication and mention of the grant of the patent: **09.07.2025**
(21) Application number: 19847591.5
(22) Date of filing: 30.05.2019
(51) Int. Cl.: G06Q 30/02, G06Q 30/06, G06N 3/02

(54) **COMMODITY INFORMATION QUERY METHOD AND SYSTEM**
VERFAHREN UND SYSTEM ZUR ABFRAGE VON WARENINFORMATIONEN
PROCÉDÉ ET SYSTÈME DE DEMANDE D'INFORMATIONS DE MARCHANDISE

(30) Priority: 08.08.2018 CN 201810898962
(43) Date of publication of application: 17.02.2021
(73) Proprietor: Advanced New Technologies Co., Ltd., George Town, Grand Cayman KY1-9008 (KY)
(72) Inventor: YANG, Xudong, Hangzhou, Zhejiang 311121 (CN); HOU, Zhangjun, Hangzhou, Zhejiang 311121 (CN); ZHANG, Xiaobo, Hangzhou, Zhejiang 311121 (CN)
(74) Representative: Goddar, Heinz J.
(86) International application number: PCT/CN2019/089185
(87) International publication number: WO 2020/029663

(56) References cited:
- EP-A1- 3 096 292
- WO-A2-2011/021862
- CN-A- 102 063 616
- CN-A- 104 778 434
- CN-A- 106 528 568
- CN-A- 107 622 434
- CN-A- 108 364 209
- CN-A- 108 364 420
- CN-A- 109 242 601
- US-A1- 2013 083 999
- US-A1- 2014 188 605
- US-A1- 2017 337 602
- US-A1- 2018 114 098
- US-A1- 2018 157 681
- US-B1- 9 489 400
- US-B1- 9 911 290

## Description

### TECHNICAL FIELD

The present specification relates to the data processing field, and in particular, to product information query methods and systems.

### BACKGROUND

With continual improvement of the e-commerce trading platform and rapid development of technologies such as conventional communications technologies and mobile communications technologies, more people obtain products they need by shopping online. Categories of products can involve all aspects of people's daily life, which provides great convenience for people's lives. However, in the online shopping process, there are deficiencies, for example, people cannot see physical objects and cannot obtain products immediately. Therefore, the existence of brick-and-mortar shopping still has its value.

In a brick-and-mortar scenario, a customer can obtain only some information of a product by viewing the appearance and packaging instructions of the product. For information that cannot be presented through the physical object, the customer cannot obtain the information. US2014/188605A1 is part of the prior-art.

### SUMMARY

To alleviate the problem in the related technology, the present specification provides product information query methods and systems.

According to a first aspect of embodiments of the present specification, a product information query system is provided, where the system includes a photographing module, a distance detection module, an information query module, and a presentation module, and at least an overlapping area exists between a detection area of the distance detection module and a photographing area of the photographing module; when detecting that a distance between the distance detection module and a moving object falls within a predetermined distance range, the distance detection module sends a notification message used to instruct for enabling a query to the information query module; after receiving the notification message, the information query module obtains an image photographed by the photographing module, and performs, by using a product image feature extracted from the image, a query to obtain product details information corresponding to the product image feature; and the presentation module presents the product details information.

In some embodiments, the moving object includes a human being; and/or the distance detection module includes an ultrasonic distance measurement module; and/or the product details information includes comment information of a to-be-queried product; and/or the photographing area includes the detection area; and/or the predetermined distance range is a distance range corresponding to the overlapping area; and/or the presentation module is a display device, a distance between the display device and a product shelf falls within a specified range, the photographing module is disposed on the top of the display device, and the distance detection module is disposed at the bottom of the display device.

In some embodiments, when detecting that the distance between the distance detection module and the moving object falls within the predetermined distance range, the distance detection module sends a message used to instruct for enabling photographing to the photographing module; or when detecting that the distance between the distance detection module and the moving object falls outside the predetermined distance range, the distance detection module sends a message used to instruct for disabling photographing to the photographing module.

In some embodiments, that the information query module performs, by using a product image feature extracted from the image, a query to obtain product details information corresponding to the product image feature includes the following: predicting a product location area of the to-be-queried product in the image based on a pre-trained product positioning model; extracting, from the product location area in the image, the product image feature used to represent basic product information, and performing similarity comparison between the extracted product image feature and a sample product image feature to obtain basic product information of the to-be-queried product; and performing a query to obtain the product details information of the to-be-queried product by using the basic product information.

In some embodiments, the image includes at least image data corresponding to two products, image data of the same product in different images is determined based on a product location area predicted in each frame of image, and basic product information of the same product is determined based on a quantity of repetitions of basic product information corresponding to image data of the product in different images.

In some embodiments, the information query module includes a processing module and a query module; after receiving the notification message, the processing module obtains the image photographed by the photographing module, predicts the product location area of the to-be-queried product in the image based on the pre-trained product positioning model, and sends image data of the product location area in the image to the query module; and the query module extracts, from the received image data, the product image feature used to represent basic product information, and performs similarity comparison between the extracted product image feature and the sample product image feature to obtain the basic product information of the to-be-queried product; and performs a query to obtain the product details information of the to-be-queried product by using the basic product information, and sends the product details information to the presentation module for presentation.

According to a second aspect of the embodiments of the present specification, a product information query method implemented based on the system according to any one of the above-mentioned embodiments is provided, and includes the following: when a distance between a distance detection module and a moving object falls within a predetermined distance range, obtaining an image photographed by a photographing module; performing, by using a product image feature extracted from the image, a query to obtain product details information corresponding to the product image feature; and presenting the product details information.

In some embodiments, the performing, by using a product image feature extracted from the image, a query to obtain product details information corresponding to the product image feature includes the following: predicting a product location area of a to-be-queried product in the image based on a pre-trained product positioning model; extracting, from the product location area in the image, the product image feature used to represent basic product information, and performing similarity comparison between the extracted product image feature and a sample product image feature to obtain basic product information of the to-be-queried product; and performing a query to obtain the product details information of the to-be-queried product by using the basic product information.

In some embodiments, the image includes at least image data corresponding to two products, image data of the same product in different images is determined based on a product location area predicted in each frame of image, and basic product information of the same product is determined based on a quantity of repetitions of basic product information corresponding to image data of the product in different images.

In some embodiments, the basic product information includes at least a product category of the to-be-queried product and a brand of the product; and/or the product details information includes comment information of the to-be-queried product.

The technical solutions provided in the embodiments of the present specification can have the following beneficial effects:

The embodiments of the present specification provide a product information query system. According to the system provided in the present specification, a brick-and-mortar product can be photographed, and a query can be performed by using a product image feature extracted from an image, to obtain product information related to the brick-and-mortar product. Therefore, in the brick-and-mortar scenario, a user can not only view a physical object, but also query more diversified product information by using the system provided in the present specification, thereby improving efficiency of obtaining information by the customer, and bringing more fun while enhancing shopping experience.

It should be understood that the previous general description and the following detailed description are merely examples and explanations, and impose no limitation on the present specification.

### BRIEF DESCRIPTION OF DRAWINGS

The accompanying drawings, which are incorporated in and constitute a part of the present specification, illustrate embodiments consistent with the present specification and, together with the description, serve to explain the principles of the present specification.
FIG. 1 is a schematic structural diagram illustrating a product information query system, according to an example embodiment of the present specification;
FIG. 2 is a flowchart illustrating a product information query method, according to an example embodiment of the present specification;
FIG. 3A is a diagram illustrating an application scenario of a product information query solution, according to an example embodiment of the present specification;
FIG. 3B is a sequence diagram illustrating a product information query method, according to an example embodiment of the present specification.

### DESCRIPTION OF EMBODIMENTS

Example embodiments are described in detail here, and examples of the example embodiments are presented in the accompanying drawings. When the following description relates to the accompanying drawings, unless specified otherwise, the same numbers in different accompanying drawings represent same or similar elements. Embodiments described below do not represent all embodiments consistent with the present specification. On the contrary, the embodiments are only examples of apparatuses and methods that are described in the appended claims in detail and consistent with some aspects of the present specification.

The terms used in the present specification are merely for illustrating specific embodiments, and are not intended to limit the present specification. The terms "a" and "the" of singular forms used in the present specification and the appended claims are also intended to include plural forms, unless otherwise specified in the context clearly. It should be further understood that the term "and/or" used in the present specification indicates and includes any or all possible combinations of one or more associated listed items.

It should be understood that although terms "first", "second", "third", etc. may be used in the present specification to describe various types of information, the information is not limited to the terms. These terms are only used to differentiate between information of the same type. For example, without departing from the scope of the present specification, first information can also be referred to as second information, and similarly, the second information can be referred to as the first information. Depending on the context, for example, the word "if" used here can be explained as "while", "when", or "in response to determining".

When a customer shops in brick-and-mortar shopping scenarios, the customer can usually obtain only some information of a product from the appearance and packaging of the product. When shopping online, a user cannot see the physical object although the user can obtain richer and more diversified product information from product details and users' comments. It can be seen that online shopping and brick-and-mortar shopping have their own advantages and disadvantages in terms of user experience.

In view of this, the embodiments of the present specification provide a product information query system. According to the system provided in the present specification, a brick-and-mortar product can be photographed, and a query can be performed by using a product image feature extracted from an image, to obtain product information related to the brick-and-mortar product. Therefore, in the brick-and-mortar scenario, a user can not only view a physical object, but also query more diversified product information by using the system provided in the present specification, thereby improving efficiency of obtaining information by the customer, and bringing more fun while enhancing shopping experience.

The following provides example descriptions of the embodiments of the present specification with reference to the accompanying drawings.

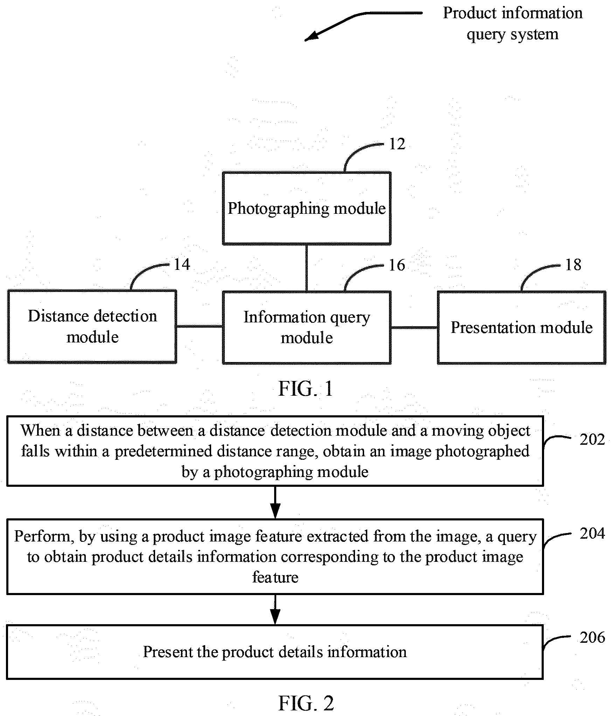

FIG. 1 is a schematic structural diagram illustrating a product information query system, according to an example embodiment of the present specification. The system includes a photographing module 12, a distance detection module 14, an information query module 16, and a presentation module 18. At least an overlapping area exists between a detection area of the distance detection module 14 and a photographing area of the photographing module 12. When detecting that a distance between the distance detection module 14 and a moving object falls within a predetermined distance range, the distance detection module 14 sends a notification message used to instruct for enabling a query to the information query module 16. After receiving the notification message, the information query module 16 obtains an image photographed by the photographing module 12, and performs, by using a product image feature extracted from the image, a query to obtain product details information corresponding to the product image feature. The presentation module 18 presents the product details information.

The modules in the system in some embodiments can be software modules, or can be hardware modules. Different modules can be integrated into the same device, or can be arranged on different devices. For example, the product information query system can be a product information query terminal. The product information query terminal can be arranged in brick-and-mortar scenarios, and a camera, a distance sensor, a screen, etc. can be configured for the product information query terminal. At least an overlapping area exists between a detection area of the distance sensor and a photographing area of the camera, so that an image of a product in the overlapping area can be obtained. To share tasks of various parts and reduce processing pressure of the same device, different modules can be arranged on different devices. For example, the photographing module can be an independent photographing apparatus, the distance detection module can be an independent distance detection apparatus, the information query module can be an information query device, and the presentation module can be a display device.

Correspondingly, based on the previously described system, the present specification further provides a product information query method. FIG. 2 is a flowchart illustrating a product information query method, according to an example embodiment of the present specification. The method includes the following steps.

Step 202: When a distance between a distance detection module and a moving object falls within a predetermined distance range, obtain an image photographed by a photographing module.

Step 204: Perform, by using a product image feature extracted from the image, a query to obtain product details information corresponding to the product image feature.

Step 206: Present the product details information.

The following provides example descriptions of the product information query system and method provided in the present specification.

To be distinguished from online products on the Internet platform, products presented and sold in physical stores can be referred to as brick-and-mortar products. In the embodiments, a to-be-queried product can be a brick-and-mortar product.

One of purposes of configuring the photographing module can be photographing a to-be-queried product, and one of purposes of configuring the distance detection module can be detecting whether a moving object enters the detection area, so that the query module can be triggered to automatically enable a query function. In view of this, at least an overlapping area exists between the detection area of the distance detection module and the photographing area of the photographing module, so that an information query can be performed on products in the overlapping area. The overlapping area can be referred to as a query area used to perform an information query on brick-and-mortar products. To enhance customer experience, the query area can be an area near the presentation module. When a customer with a product enters the query area, the product entering the query area can be determined as a to-be-queried product. For example, the query area can be limited to a specified area in front of the screen, so that when shopping, the customer actively places the product near the screen, so that the product enters the query area.

In some embodiments, the detection area of the distance detection module can be the same as the photographing area of the photographing module, so as to maximize the query area. However, in practice, the detection area of the distance detection module is obtained by adjusting a layout location and a configuration parameter of the distance sensor, and the photographing area of the photographing module is also obtained by adjusting a layout location and a configuration parameter of the camera. Therefore, to reduce the difficulty of achieving the coincidence between the detection area of the distance detection module and the photographing area of the photographing module, in some other embodiments, the photographing area can be configured to include the detection area, for example, the photographing area is slightly larger than the detection area, so that the detection area can be used as the query area for performing an information query on brick-and-mortar products. In another example, the detection area can be configured to include the photographing area, for example, the detection area is slightly larger than the photographing area, so that the photographing area can be used as the query area for performing an information query on brick-and-mortar products.

The distance detection module can determine distance data of an object through transmission and reception of a certain substance. For example, the distance detection module can be one or more of an ultrasonic distance measurement module, an infrared distance measurement module, and an optical distance measurement module. In an example that the distance detection module is a sensor and is an ultrasonic distance sensor, an ultrasonic wave transmitted by the ultrasonic distance sensor is reflected after reaching the surface of an object, and a distance between the object and the sensor is calculated by using a time difference between transmission of the ultrasonic wave and reception of an echo. The distance detection module can include only one distance sensor, or can include multiple distance sensors. Determining a distance of an object based on data detected by multiple distance sensors can improve determining accuracy.

The photographing module can be a device that can perform photographing and/or recording, and is specifically set as needed.

A condition for obtaining, by the information query module, the image photographed by the photographing module can be that the distance detection module detects that the distance between the distance detection module and the moving object falls within the predetermined distance range, so as to reduce a waste of resources caused by identifying images photographed by the photographing module and querying product information all the time. The predetermined distance range can be determined based on the detection area of the distance detection module. For example, the predetermined distance range can be a distance range determined by the detection area, or can be smaller than a distance range determined by the detection area. In some embodiments, the predetermined distance range can be determined based on the overlapping area. For example, the predetermined distance range is set to a distance range corresponding to the overlapping area, so that a query operation is triggered only when the moving object is in the overlapping area.

The image can be an image obtained by the photographing module by photographing a scene in the photographed area. In an example, the photographing module can be in a photographing mode, for example, performing photographing at intervals of predetermined time periods and generating images. In another example, the photographing module can be in a recording mode, in other words, perform photographing on a scene in a photographing range and generate video data. Therefore, the image can be a single image photographed by the photographing module, or can be video frames of video data photographed by the photographing module.

Because the distance detection module can determine a distance between the distance detection module and an object through transmission and reception of a certain substance, especially the distance to the moving object, the distance detection module can detect whether the distance between the distance detection module and the moving object falls within the predetermined distance range, to determine whether the moving object exists in the predetermined distance range. The moving object usually carries a brick-and-mortar product (a to-be-queried product), and at least an overlapping area exists between the detection area of the distance detection module and the photographing area of the photographing module. Therefore, after the brick-and-mortar product enters the overlapping area, an object photographed by the photographing module can include the brick-and-mortar product.

In practice, if the photographing module is always in a photographing state, power of the photographing module is likely to be wasted. To reduce a waste of power caused by real-time photographing of the photographing module and memory resources occupied by photographed images, conditions for enabling and disabling a photographing function of the photographing module can be set.

In some embodiments, when the distance detection module detects that the distance between the distance detection module and the moving object falls within the predetermined distance range, the distance detection module sends a message used to instruct for enabling photographing to the photographing module, and the photographing module can enter the photographing mode based on the message. When the distance detection module detects that the distance between the distance detection module and the moving object falls outside the predetermined distance range, the distance detection module sends a message used to instruct for disabling photographing to the photographing module, and the photographing module can exit the photographing mode based on the message.

It can be seen that the distance detection module can be configured to determine whether the moving object is in an area corresponding to the predetermined distance range, enable the photographing function of the photographing module when the moving object enters the area, and disable the photographing function of the photographing module when the moving object leaves the area, thereby automatically enabling and disabling the photographing function of the photographing module, saving power, and reduce memory resources occupied by photographed images.

After the image photographed by the photographing module is obtained, the product details information corresponding to the product image feature can be obtained by performing a query by using the product image feature extracted from the image. In some embodiments, through image recognition, more product information of a brick-and-mortar product can be obtained and presented, and a user does not need to perform an online query manually. The product details information can be information related to the to-be-queried product in the overlapping area, especially information that cannot be displayed by a brick-and-mortar product. For example, information about an online product corresponding to a brick-and-mortar product is used as product details information of the brick-and-mortar product.

In some embodiments, the product details information can include comment information of the to-be-queried product. It can be seen that presenting the comment information of the to-be-queried product can help the customer determine whether to purchase the to-be-queried product and provide a reference for the customer's shopping.

It can be understood that the product details information can be other types of information, for example, multi-dimensional information such as a product image and a video describing the product.

As for how to obtain the product details information corresponding to the product image feature by performing a query by using the product image feature extracted from the image, in some embodiments, a mapping relationship between a product image feature and product details information can be stored, and further, the product details information corresponding to the product image feature is obtained by performing a query in the product information database by using the extracted product image feature and the predetermined mapping relationship.

In some other embodiments, basic product information of the to-be-queried product can be obtained through image recognition, and further, the product details information is obtained by performing a query by using the basic product information. The basic product information can be product information easily obtained through image recognition, especially a product identifier that can identify the to-be-queried product.

A granularity of the basic product information can be determined based on an expected correlation between the presented product information and an actual brick-and-mortar product. However, to avoid a very low correlation between the presented product information and the actual brick-and-mortar product, in some embodiments, the basic product information includes at least a product category of the to-be-queried product and a brand of the product, ensuring that the presented product information is at least information about a product of the same brand and category.

For example, in one policy, the product information expected to be presented can be information about a product of the same brand and category as the brick-and-mortar product, and other small distinguishing feature (e.g., taste) can be ignored. In this case, the basic product information includes the product category of the to-be-queried product and the brand of the product. For example, the basic product information can be a potato chip of a brand xx. In another policy, the product information expected to be presented is product information corresponding to the brick-and-mortar product. In this case, the basic product information can be a product name such as a lime flavor potato chip of a brand xx.

Further, to improve calculation efficiency, a product location area of the to-be-queried product in the image can be predicted first, and then image recognition is performed only on image data corresponding to the product location area.

The following provides descriptions by using one of the product details information query methods as an example.

That the information query module performs, by using a product image feature extracted from the image, a query to obtain product details information corresponding to the product image feature can include the following: predicting a product location area of the to-be-queried product in the image based on a pre-trained product positioning model; extracting, from the product location area in the image, the product image feature used to represent basic product information, and performing similarity comparison between the extracted product image feature and a sample product image feature to obtain basic product information of the to-be-queried product; and performing a query to obtain the product details information of the to-be-queried product by using the basic product information.

The product location area can also be referred to as a product selection area or a product selection frame. The product positioning model can be a model used to predict a product location area in an image. In some embodiments, a training sample can be constructed by using a sample image of a known product location area, and model training is performed by using the training sample to obtain the product positioning model. For example, the product positioning model is obtained through training by using a deep convolutional neural network. The sample product image feature corresponds to basic product information. Therefore, basic product information corresponding to sample product image feature whose similarity to the product image feature of the to-be-queried product satisfies a requirement can be used as the basic product information of the to-be-queried product based on a result of similarity comparison.

In practice, multiple brick-and-mortar products may exist in the overlapping area. In an example, the to-be-queried product can be brick-and-mortar products in the photographing area, in other words, all the brick-and-mortar products in the photographing area are used as the to-be-queried product, and obtained product details information is presented.

In another example, the to-be-queried product can be a product selected from brick-and-mortar products in the photographing area. For example, the to-be-queried brick-and-mortar product can be determined with reference to other objects associated with the to-be-queried product. For example, a brick-and-mortar product held by a customer or held by a customer by using a clip is usually a brick-and-mortar product that the customer expects to query. Therefore, screening can be performed on brick-and-mortar products in the photographed area based on hand information or clip information.

For example, during construction of a training sample for training the product positioning model, objects in an sample image can be classified into a product type and an associated object type, other objects can be used as the background, and a location area of an object (such as a product or an associated object) and a corresponding type of the object can be used as a label to construct the training sample. For example, a product location area of a product in the image and the product type that the area belongs to are used as a label, and an object location area of an associated object and the associated object type that the area belongs to are used as a label, to construct the training sample, so that the model is trained by using the constructed training sample, and therefore the product positioning model is obtained. The associated object of the product can be an object such as the hand that can support the product.

In the process of predicting the location area of the to-be-identified product in the image based on the product positioning model, from an output result of the product positioning model, based on a location relationship between a product location area belonging to the product type and an object location area belonging to the associated object type, a product location area whose distance from an associated object location area falls within a predetermined range can be determined as the product location area of the to-be-identified product. For example, a product location area that overlaps or is closest to an associated object location area can be determined as the product location area of the to-be-identified product. If the image includes no associated object, all products in the image can be determined as the to-be-identified product, or a product in a specified area can be determined as the to-be-identified product, where the specified area can be a predetermined central area.

In other embodiments, a product positioning model that can directly predict a product location area of a to-be-identified product can also be trained. Details are omitted here for simplicity.

It can be seen that in some embodiments, determining the to-be-queried product with reference to the associated object of the product can improve accuracy of obtaining the product location area of the to-be-queried product.

After the product location area is obtained, the product image feature used to represent basic product information can be extracted from the product location area in the image, a similarity between the extracted product image feature and the sample product image feature can be calculated, and basic product information corresponding to a sample product image feature whose similarity to the extracted product image feature satisfies a requirement can be used as a result of the current similarity comparison. This process can be implemented using a deep learning model. Details are omitted here for simplicity.

It can be understood that the basic product information of the to-be-queried product can be obtained based on the image by using other methods. For example, the image is input into a pre-trained basic product information detection model, to obtain information such as the basic product information of the to-be-queried product. Details are omitted here for simplicity.

In practice, product details information obtained by performing an information query by using one frame of image may be inaccurate. Therefore, in some embodiments, query results of multiple frames of images can be further combined, so as to improve stability of a returned result. A product information query is performed on each frame of image, and the product details information of the to-be-queried product is determined based on a quantity of repetitions of information in query results. In particular, in a two-step query (the basic product information is first obtained, and then the product details information is obtained), a product image feature used to represent basic product information is extracted for each frame of image, and similarity comparison is performed between the extracted product image feature and the sample product image feature to obtain a comparison result. The basic product information of the to-be-queried product is determined based on a quantity of repetitions of basic product information in comparison results corresponding to a predetermined quantity of frames of images. The predetermined quantity of frames of images are video frames photographed at adjacent times. For example, the predetermined quantity of frames can be 5. Feature extraction and similarity comparison are separately performed for the recent five video frames to obtain comparison results, and basic product information that has the highest occurrence rate among basic product information in the comparison results is used as the final basic product information of the to-be-queried product.

It can be seen that combining comparison results of multiple frames of images can improve accuracy of obtaining the basic product information and further improve accuracy of obtaining the product details information.

Because multiple products may exist in the photographing area, an image that includes multiple products is obtained, in other words, the image includes at least image data corresponding to two products. Therefore, in some embodiments, image data of the same product in different images is determined based on a product location area predicted in each frame of image, and basic product information of the same product is determined based on a quantity of repetitions of basic product information corresponding to image data of the same product in different images.

It can be seen that some embodiments provide a method for determining the same product in different images. Each product is represented by image data in an image. Image data of the same product in different images can be determined by using a product location area predicted in each frame of image. Further, basic product information of the same product is determined based on a quantity of repetitions of basic product information corresponding to image data of the product in different images. For example, basic product information with the most repetitions larger than a quantity threshold can be used as the basic product information of the product. Otherwise, it is determined that no basic product information is detected.

For example, comparison results obtained by separately performing feature extraction and similarity comparison on recent five frames of images can be stored, matching is performed on comparison results of different frames based on product location areas, and products with very close locations are used as the same product. For the same product, basic product information that occurs more than three times and has the highest occurrence rate is used as basic product information of the product finally obtained through a query. If basic product information of a product occurs less than three times, it is considered that the product is not detected. After the basic product information is obtained, the product details information of the to-be-queried product can be obtained by performing a query by using the basic product information.

The query process of the product details information can be performed offline or online. For example, after the product image feature is extracted, the product details information corresponding to the product image feature can be obtained from a server over the Internet, or the product details information corresponding to the product image feature can be obtained through a local query. Based on different layout policies, the information query module can be implemented by one module, or can be implemented by multiple modules.

In some embodiments, the information query module includes a processing module and a query module. After receiving the notification message, the processing module obtains the image photographed by the photographing module, predicts the product location area of the to-be-queried product in the image based on the pre-trained product positioning model, and sends image data of the product location area in the image to the query module. The query module extracts, from the received image data, the product image feature used to represent basic product information, and performs similarity comparison between the extracted product image feature and the sample product image feature to obtain the basic product information of the to-be-queried product; and performs a query to obtain the product details information of the to-be-queried product by using the basic product information, and sends the product details information to the presentation module for presentation.

In some embodiments, the processing module can be arranged locally, and the query module can be arranged on the server. The image data of the product location area in the image is sent to the query module, so that the image data representing the product in the image is sent to the query module, which can reduce an amount of transmitted data and reduce operation overheads of the query module.

The product details information can be presented through static display, dynamic display, video playback, etc. Further, the presentation module can have an interactive function. For example, the presentation module can be a touchscreen, so that the customer controls presented information.

It can be seen from the previous embodiment that when the distance detection module detects that the distance between the distance detection module and the moving object falls within the predetermined distance range, the information query module is automatically triggered to perform the image acquisition operation, the information query module obtains, by using the product image feature extracted from the image, the product details information corresponding to the product image feature, and the presentation module presents the product details information. As such, the information about the brick-and-mortar product can be presented automatically, thereby improving efficiency of obtaining the product information by the customer.

Various technical features in the previous implementations can be combined randomly, provided that there is no conflict or contradiction if they are combined. Details are omitted for simplicity. Therefore, any combination of the various technical features in the previous implementations also falls within the scope disclosed in the present specification.

For ease of understanding, application examples are further used to describe the product information query solution in the present specification.

In some embodiments, the product information query solution can be completed by the same device. For example, in a brick-and-mortar scenario such as a store or a shopping mall, at least one query terminal with a photographing function, a distance measurement function, and a presentation function is disposed, and a distance between the query terminal and a shelf falls within a specified distance range.

In some other embodiments, the product information query system can include a query terminal, a server, a photographing apparatus, and a distance detection apparatus. In some embodiments, the query terminal can be a device with a processing capability and a display capability. The query terminal can be disposed on or near a shelf, making it easier for a customer to perform a query. The photographing apparatus and the distance detection apparatus can be disposed at locations associated with the query terminal. At least an overlapping area exists between a detection area of the distance detection module and a photographing area of the photographing module, and the overlapping area can be an area used to perform a product query. A processing module and a presentation module can be disposed on the query terminal, and a query module can be disposed on the server. Specifically, after receiving a notification message, the query terminal can obtain an image photographed by the photographing module, predict a product location area of a to-be-queried product in the image based on a pre-trained product positioning model, and send image data of the product location area in the image to the server. The server extracts, from the received image data, a product image feature used to represent basic product information, and performs similarity comparison between the extracted product image feature and a sample product image feature to obtain basic product information of the to-be-queried product; and performs a query to obtain product details information of the to-be-queried product by using the basic product information, and sends the product details information to the query terminal for presentation.

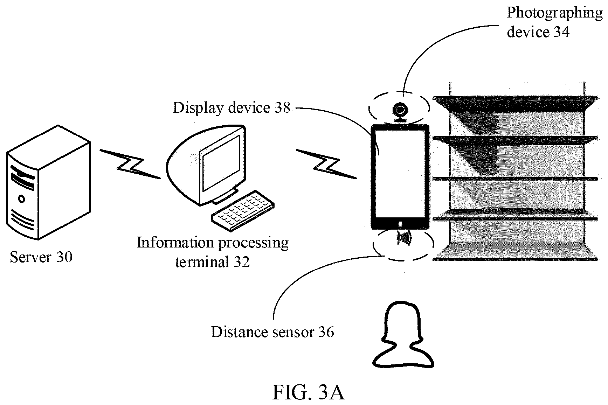

In practice, in some large shopping malls, multiple terminals for displaying product information need to be arranged. In view of this, an embodiment of the present specification further provides another product information query system. FIG. 3A is a diagram illustrating an application scenario of a product information query solution, according to an example embodiment of the present specification. The system includes a server 30, an information processing terminal 32, at least one photographing device 34, at least one distance sensor 36, and at least one display device 38. There is a binding relationship between the display device 38 and each of the photographing device 34 and the distance sensor 36. The binding relationship can be a mapping relationship, so that product details information obtained based on data collected by the photographing device 34 and the distance sensor 36 can be presented on the display device 38. The information processing terminal 32, the photographing device 34, the distance sensor 36, and the display device 38 can all be arranged locally. The photographing device 34, the distance sensor 36, and the display device 38 separately communicate with the information processing terminal 32 through wired or wireless transmission. The information processing terminal 32 can be arranged on a local processing center, so as to implement overall control over local information. The display device 38 can be a device with at least a display function. A distance between the display device 38 and a product shelf falls within a specified range, so that a user can quickly query product information. The photographing device 34 can be disposed on the top of the display device 38, and the distance sensor 36 can be disposed at the bottom of the display device 34. Further, the display device can have a touch function.

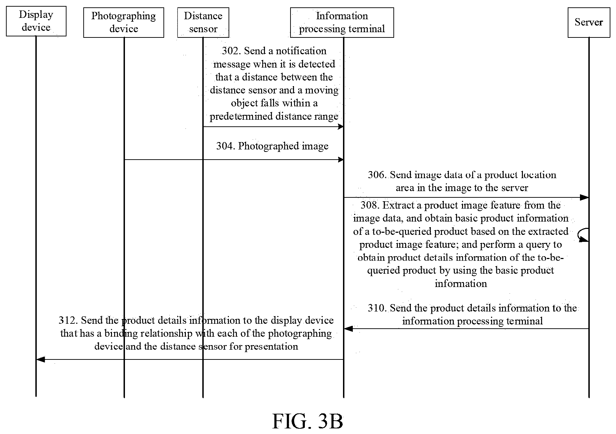

Correspondingly, FIG. 3B is a sequence diagram illustrating a product information query method in the scenario shown in FIG. 3A. When detecting that a distance between the distance sensor and a moving object falls within a predetermined distance range, the distance sensor sends a notification message used to instruct for enabling a query to the information processing terminal (step 302). After receiving the notification message, the information processing terminal obtains an image photographed by the photographing device (step 304). The information processing terminal predicts a product location area of a to-be-queried product in the image based on a pre-trained product positioning model, and sends image data of the product location area in the image to the server (step 306). The server extracts, from the received image data, a product image feature used to represent basic product information, performs similarity comparison between the extracted product image feature and a sample product image feature, and obtains basic product information of the to-be-queried product based on a comparison result and basic product information corresponding to the sample product image feature; and performs a query to obtain product details information of the to-be-queried product by using the basic product information (step 308). The server sends the product details information to the information processing terminal (step 310). The information processing terminal sends the product details information to the display device that has a binding relationship with each of the photographing device and the distance sensor for presentation (step 312).

Related technologies of FIG. 3B are the same as those of FIG. 1 and FIG. 2, and details are omitted here for simplicity. The server can be a cloud server with a relatively strong processing capability.

Based on FIG. 3A and FIG. 3B, an interactive screen can be disposed near a shelf where products are placed. A photographing apparatus and an acoustic distance measurement apparatus are configured for the interactive screen. The photographing apparatus is disposed on the upper part of the interactive screen, the acoustic distance measurement apparatus is disposed on the lower part of the interactive screen, and dimensions of the interactive screen can be set based on an average height of people. An overlapping area between a detection area of the acoustic distance measurement apparatus and a photographing area of the photographing apparatus is used as a query area used to query a product. After the acoustic distance measurement apparatus detects that a customer enters the query area, the photographing device can enable photographing. To obtain a clearer image, the customer can lift up a to-be-queried product with hands, and the photographing device can photograph the to-be-queried product. The information processing terminal sends the image obtained from the photographing device to the server, and the server performs a query to obtain product details information of the to-be-queried product, and displays the product details information on the interactive screen.

It can be seen from the previous embodiment that the information processing terminal implements overall control, so that a hardware requirement on a display device is low, and multiple display devices can be arranged for a customer to perform a query. Because the system is deployed at one time, no manual intervention is needed, which reduces labor costs, and no electronic labels are needed for brick-and-mortar products. The system is more stable, and both the distance sensor and the camera are installed on fixed locations and are difficult to damage. In addition, the system is a fully automated system, which reduces the risk of errors caused by manual intervention.

The previously described system embodiments are merely examples. The modules described as separate parts can be or does not have to be physically separate, and parts displayed as modules can be or does not have to be physical modules, and can be located in one location, or can be distributed on a plurality of network modules. Some or all of the modules can be selected based on actual needs to achieve the objectives of the solutions of the present specification. A person of ordinary skill in the art can understand and implement the embodiments of the present specification without creative efforts.

Correspondingly, a terminal device is provided. The terminal device includes a display, a memory, a processor, and a computer program that is stored in the memory and can run on the processor, and the processor executes the program to perform the following method: after a notification message that is sent by a distance detection module and is used to instruct for enabling a query is received, obtaining an image photographed by a photographing module, where the notification message is sent by the distance detection module when the distance detection module detects that a distance between the distance detection module and a moving object falls within a predetermined distance range, and at least an overlapping area exists between a detection area of the distance detection module and a photographing area of the photographing module; sending the image to a server, and receiving product details information fed back by the server, where the product details information is obtained by the information query server by performing a query by using a product image feature extracted from the image; and controlling the display to present the product details information.

Correspondingly, a server is provided. The server includes a memory, a processor, and a computer program that is stored in the memory and can run on the processor, and the processor executes the program to perform the following method: receiving an image sent by a terminal device; performing, by using a product image feature extracted from the image, a query to obtain product details information corresponding to the product image feature; and sending the product details information to the terminal device.

The embodiments of the present specification are described in a progressive way. For same or similar parts of the embodiments, references can be made to the embodiments. Each embodiment focuses on a difference from other embodiments. Particularly, device embodiments are basically similar to method embodiments, and therefore, are described briefly. For related parts, references can be made to related descriptions in the method embodiments.

Correspondingly, an embodiment of the present specification further provides a computer storage medium. The storage medium stores a program instruction, and the program instruction includes the following: when a distance between a distance detection module and a moving object falls within a predetermined distance range, obtaining an image photographed by a photographing module; performing, by using a product image feature extracted from the image, a query to obtain product details information corresponding to the product image feature; and presenting the product details information.

The embodiments of the present specification can use a form of a computer program product that is implemented on one or more storage media (including but not limited to a disk memory, a CD-ROM, an optical memory, etc.) that include program code. The computer-usable readable medium includes persistent, non-persistent, movable, and unmovable media that can store information by using any method or technology. The information can be a computer readable instruction, a data structure, a program module, or other data. Examples of the computer storage medium include but are not limited to a phase change random access memory (PRAM), a static RAM (SRAM), a dynamic RAM (DRAM), a RAM of another type, a read-only memory (ROM), an electrically erasable programmable ROM (EEPROM), a flash memory or another memory technology, a compact disc ROM (CD-ROM), a digital versatile disc (DVD), or another optical storage, a cassette, a cassette magnetic disk storage, or another magnetic storage device or any other non-transmission medium. The computer storage medium can be configured to store information that can be accessed by a computing device.

A person skilled in the art can easily figure out another implementation solution of the present specification after considering the present specification and practicing the present disclosure here. The present specification is intended to cover any variations, uses, or adaptations of the present specification, and these variations, uses, or adaptations follow the general principles of the present specification and include common knowledge or conventional techniques that are not disclosed in the technical field of the present specification. The present specification and the embodiments are merely considered as examples, and the actual scope of the present specification are pointed out by the following claims.

It should be understood that the present specification is not limited to the precise structures that have been described above and shown in the drawings, and various modifications and changes can be made without departing from the scope of the present specification. The scope of the present specification is limited by the appended claims only.

The previous descriptions are merely preferred embodiments of the present specification, but are not intended to limit the present specification. Any modification, equivalent replacement, or improvement made without departing from the principle of the present specification shall fall within the protection scope of the present specification.

## Claims

1. A product information query system, wherein the system comprises a photographing module (12), a distance detection module (14), an information query module (16), and a presentation module (18), and at least an overlapping area exists between a detection area of the distance detection module and a photographing area of the photographing module;
when detecting that a distance between the distance detection module (14) and a moving object falls within a predetermined distance range, the distance detection module (14) sends (202) a notification message used to instruct for enabling a query to the information query module (16);
after receiving the notification message, the information query module (16) obtains an image photographed by the photographing module (12), and performs (204), by using a product image feature extracted from the image, a query to obtain product details information corresponding to the product image feature, comprising:
predicting a product location area of a to-be-queried product in the image based on a pre-trained product positioning model, comprising:
determining, from an output result of the pre-trained product positioning model, based on a location relationship between a product location area belonging to a product type of a to-be identified product and an object location area belonging to an associated object type, a product location area whose distance from an associated object location area falls within a predetermined range as the product location area of the to-be-queried product;
extracting, from the product location area in the image, the product image feature used to represent basic product information, and performing similarity comparison between the extracted product image feature and a sample product image feature to obtain basic product information of the to-be-queried product; and
performing a query to obtain the product details information of the to-be-queried product by using the basic product information; and
the presentation module (18) presents (206) the product details information.

2. The system according to claim 1, wherein the moving object comprises a human being; and/or
the distance detection module (14) comprises an ultrasonic distance measurement module; and/or
the product details information comprises comment information of a to-be-queried product; and/or
the photographing area comprises the detection area; and/or
the predetermined distance range is a distance range corresponding to the overlapping area; and/or
the presentation module (18) is a display device, a distance between the display device and a product shelf falls within a specified range, the photographing module is disposed on the top of the display device, and the distance detection module is disposed at the bottom of the display device.

3. The system according to claim 1, wherein when detecting that the distance between the distance detection module and the moving object falls within the predetermined distance range, the distance detection module (14) sends a message used to instruct for enabling photographing to the photographing module (12); or when detecting that the distance between the distance detection module and the moving object falls outside the predetermined distance range, the distance detection module (14) sends a message used to instruct for disabling photographing to the photographing module (12).

4. The system according to claim 3, wherein the image comprises at least image data corresponding to two products, image data of the same product in different images is determined based on a product location area predicted in each frame of image, and basic product information of the same product is determined based on a quantity of repetitions of basic product information corresponding to image data of the product in different images.

5. The system according to claim 3, wherein the information query module (16) comprises a processing module and a query module;
after receiving the notification message, the processing module obtains the image photographed by the photographing module, predicts the product location area of the to-be-queried product in the image based on the pre-trained product positioning model, and sends image data of the product location area in the image to the query module; and
the query module extracts, from the received image data, the product image feature used to represent basic product information, and performs similarity comparison between the extracted product image feature and the sample product image feature to obtain the basic product information of the to-be-queried product; and performs a query to obtain the product details information of the to-be-queried product by using the basic product information, and sends the product details information to the presentation module for presentation.

6. A product information query method implemented based on the system according to any one of claims 1 to 5, comprising:
when a distance between a distance detection module and a moving object falls within a predetermined distance range, obtaining (202) an image photographed by a photographing module;
performing (204), by using a product image feature extracted from the image, a query to obtain product details information corresponding to the product image feature, comprising:
predicting a product location area of a to-be-queried product in the image based on a pre-trained product positioning model, comprising:
determining, from an output result of the pre-trained product positioning model, based on a location relationship between a product location area belonging to a product type of the to-be identified product and an object location area belonging to an associated object type, a product location area whose distance from an associated object location area falls within a predetermined range as the product location area of the to-be-queried product;
extracting, from the product location area in the image, the product image feature used to represent basic product information, and performing similarity comparison between the extracted product image feature and a sample product image feature to obtain basic product information of the to-be-queried product; and
performing a query to obtain the product details information of the to-be-queried product by using the basic product information; and
presenting (206) the product details information.

7. The method according to claim 6, wherein the image comprises at least image data corresponding to two products, image data of the same product in different images is determined based on a product location area predicted in each frame of image, and basic product information of the same product is determined based on a quantity of repetitions of basic product information corresponding to image data of the product in different images.

8. The method according to claim 6, wherein the basic product information comprises at least a product category of the to-be-queried product and a brand of the to-be-queried product; and/or the product details information comprises comment information of the to-be-queried product.

## Patentansprüche

1. Produktinformationsabfragesystem, wobei das System ein Fotografiermodul (12), ein Abstandserfassungsmodul (14), ein Informationsabfragemodul (16) und ein Präsentationsmodul (18) umfasst und mindestens ein Überlappungsbereich zwischen einem Erfassungsbereich des Abstandserfassungsmoduls und einem Fotografierbereich des Fotografiermoduls besteht;
wenn erfasst wird, dass ein Abstand zwischen dem Abstandserfassungsmodul (14) und einem sich bewegenden Objekt in einen vorbestimmten Abstandsbereich fällt, sendet (202) das Abstandserfassungsmodul (14) eine Benachrichtigungsnachricht, die dazu dient, das Informationsabfragemodul (16) anzuweisen, eine Abfrage zu aktivieren;
nach dem Empfangen der Benachrichtigungsnachricht erhält das Informationsabfragemodul (16) ein Bild, das von dem Fotografiermodul (12) fotografiert wurde, und führt (204) unter Verwendung eines Produktbildmerkmals, das aus dem Bild extrahiert wurde, eine Abfrage durch, um Produktdetailinformationen zu erhalten, die dem Produktbildmerkmal entsprechen, umfassend:
Vorhersagen eines Produktstandortbereichs eines abzufragenden Produkts in dem Bild basierend auf einem vortrainierten Produktpositionierungsmodell, umfassend:
Bestimmen, aus einem Ausgabeergebnis des vortrainierten Produktpositionierungsmodells, basierend auf einer Standortbeziehung zwischen einem Produktstandortbereich, der zu einem Produkttyp eines zu identifizierenden Produkts gehört, und einem Objektstandortbereich, der zu einem assoziierten Objekttyp gehört, eines Produktstandortbereichs, dessen Abstand von einem assoziierten Objektstandortbereich in einen vorbestimmten Bereich fällt, als den Produktstandortbereich des abzufragenden Produkts;
Extrahieren, aus dem Produktstandortbereich in dem Bild, des Produktbildmerkmals, das verwendet wird, um grundlegende Produktinformationen darzustellen, und Durchführen eines Ähnlichkeitsvergleichs zwischen dem extrahierten Produktbildmerkmal und einem Musterproduktbildmerkmal, um grundlegende Produktinformationen des abzufragenden Produkts zu erhalten; und
Durchführen einer Abfrage, um die Produktdetailinformationen des abzufragenden Produkts unter Verwendung der grundlegenden Produktinformationen zu erhalten; und
das Präsentationsmodul (18) präsentiert (206) die Produktdetailinformationen.

2. System nach Anspruch 1, wobei das sich bewegende Objekt einen Menschen umfasst; und/oder
das Abstandserfassungsmodul (14) ein Ultraschallabstandsmessmodul umfasst; und/oder
die Produktdetailinformationen Kommentarinformationen eines abzufragenden Produkts umfassen; und/oder
der Fotografierbereich den Erfassungsbereich umfasst; und/oder
der vorbestimmte Abstandsbereich ein Abstandsbereich ist, der dem Überlappungsbereich entspricht; und/oder
das Präsentationsmodul (18) eine Anzeigevorrichtung ist, ein Abstand zwischen der Anzeigevorrichtung und einem Produktregal in einen spezifizierten Bereich fällt, das Fotografiermodul oben auf der Anzeigevorrichtung angeordnet ist und das Abstandserfassungsmodul unten auf der Anzeigevorrichtung angeordnet ist.

3. System nach Anspruch 1, wobei, wenn erfasst wird, dass der Abstand zwischen dem Abstandserfassungsmodul und dem sich bewegenden Objekt in den vorbestimmten Abstandsbereich fällt, das Abstandserfassungsmodul (14) eine Nachricht sendet, die dazu dient, das Fotografiermodul (12) anzuweisen, das Fotografieren zu aktivieren; oder wenn erfasst wird, dass der Abstand zwischen dem Abstandserfassungsmodul und dem sich bewegenden Objekt außerhalb des vorbestimmten Abstandsbereichs fällt, das Abstandserfassungsmodul (14) eine Nachricht sendet, die dazu dient, das Fotografiermodul (12) anzuweisen, das Fotografieren zu deaktivieren.

4. System nach Anspruch 3, wobei das Bild mindestens Bilddaten umfasst, die zwei Produkten entsprechen, Bilddaten desselben Produkts in verschiedenen Bildern basierend auf einem Produktstandortbereich bestimmt werden, der in jedem Einzelbild vorhergesagt wird, und Basisproduktinformationen desselben Produkts basierend auf einer Anzahl von Wiederholungen von Basisproduktinformationen bestimmt werden, die Bilddaten des Produkts in verschiedenen Bildern entsprechen.

5. System nach Anspruch 3, wobei das Informationsabfragemodul (16) ein Verarbeitungsmodul und ein Abfragemodul umfasst;
nach dem Empfangen der Benachrichtigungsnachricht erhält das Verarbeitungsmodul das Bild, das von dem Fotografiermodul fotografiert wurde, sagt den Produktstandortbereich des abzufragenden Produkts in dem Bild basierend auf dem vortrainierten Produktpositionierungsmodell vorher und sendet Bilddaten des Produktstandortbereichs in dem Bild an das Abfragemodul; und
das Abfragemodul extrahiert aus den empfangenen Bilddaten das Produktbildmerkmal, das verwendet wird, um grundlegende Produktinformationen darzustellen, und führt einen Ähnlichkeitsvergleich zwischen dem extrahierten Produktbildmerkmal und dem Musterproduktbildmerkmal durch, um die grundlegenden Produktinformationen des abzufragenden Produkts zu erhalten; und führt eine Abfrage durch, um die Produktdetailinformationen des abzufragenden Produkts unter Verwendung der grundlegenden Produktinformationen zu erhalten, und sendet die Produktdetailinformationen zur Präsentation an das Präsentationsmodul.

6. Produktinformationsabfrageverfahren, das basierend auf dem System nach einem der Ansprüche 1 bis 5 implementiert ist, umfassend:
wenn ein Abstand zwischen einem Abstandserfassungsmodul und einem sich bewegenden Objekt in einen vorbestimmten Abstandsbereich fällt, Erhalten (202) eines Bildes, das von einem Fotografiermodul fotografiert wurde;
Durchführen (204), unter Verwendung eines Produktbildmerkmals, das aus dem Bild extrahiert wurde, einer Abfrage, um Produktdetailinformationen zu erhalten, die dem Produktbildmerkmal entsprechen, umfassend:
Vorhersagen eines Produktstandortbereichs eines abzufragenden Produkts in dem Bild basierend auf einem vortrainierten Produktpositionierungsmodell, umfassend:
Bestimmen, aus einem Ausgabeergebnis des vortrainierten Produktpositionierungsmodells, basierend auf einer Standortbeziehung zwischen einem Produktstandortbereich, der zu einem Produkttyp des zu identifizierenden Produkts gehört, und einem Objektstandortbereich, der zu einem assoziierten Objekttyp gehört, eines Produktstandortbereichs, dessen Abstand von einem assoziierten Objektstandortbereich in einen vorbestimmten Bereich fällt, als den Produktstandortbereich des abzufragenden Produkts;
Extrahieren, aus dem Produktstandortbereich in dem Bild, des Produktbildmerkmals, das verwendet wird, um grundlegende Produktinformationen darzustellen, und Durchführen eines Ähnlichkeitsvergleichs zwischen dem extrahierten Produktbildmerkmal und einem Musterproduktbildmerkmal, um grundlegende Produktinformationen des abzufragenden Produkts zu erhalten; und
Durchführen einer Abfrage, um die Produktdetailinformationen des abzufragenden Produkts unter Verwendung der grundlegenden Produktinformationen zu erhalten; und
Präsentieren (206) der Produktdetailinformationen.

7. Verfahren nach Anspruch 6, wobei das Bild mindestens Bilddaten umfasst, die zwei Produkten entsprechen, Bilddaten desselben Produkts in verschiedenen Bildern basierend auf einem Produktstandortbereich bestimmt werden, der in jedem Einzelbild vorhergesagt wird, und Basisproduktinformationen desselben Produkts basierend auf einer Anzahl von Wiederholungen von Basisproduktinformationen bestimmt werden, die Bilddaten des Produkts in verschiedenen Bildern entsprechen.

8. Verfahren nach Anspruch 6, wobei die Basisproduktinformationen mindestens eine Produktkategorie des abzufragenden Produkts und eine Marke des abzufragenden Produkts umfassen; und/oder die Produktdetailinformationen Kommentarinformationen des abzufragenden Produkts umfassen.

## Revendications

1. Système d'interrogation d'informations de produit, dans lequel le système comprend un module de photographie (12), un module de détection de distance (14), un module d'interrogation d'informations (16) et un module de présentation (18), et au moins une zone de chevauchement existe entre une zone de détection du module de détection de distance et une zone de photographie du module de photographie ;
lors de la détection qu'une distance entre le module de détection de distance (14) et un objet en mouvement se situe dans une plage de distance prédéterminée, le module de détection de distance (14) envoie (202) un message de notification utilisé pour ordonner l'activation d'une interrogation au module d'interrogation d'informations (16) ;
après la réception du message de notification, le module d'interrogation d'informations (16) obtient une image photographiée par le module de photographie (12), et effectue (204), en utilisant une caractéristique d'image de produit extraite de l'image, une interrogation pour obtenir des informations de détail de produit correspondant à la caractéristique d'image de produit, comprenant :
la prédiction d'une zone d'emplacement de produit d'un produit à interroger dans l'image sur la base d'un modèle de positionnement de produit pré-entraîné, comprenant :
la détermination, à partir d'un résultat de sortie du modèle de positionnement de produit pré-entraîné, sur la base d'une relation d'emplacement entre une zone d'emplacement de produit appartenant à un type de produit d'un produit à identifier et une zone d'emplacement d'objet appartenant à un type d'objet associé, d'une zone d'emplacement de produit dont la distance par rapport à une zone d'emplacement d'objet associée se situe dans une plage prédéterminée en tant que zone d'emplacement de produit du produit à interroger ;
l'extraction, à partir de la zone d'emplacement de produit dans l'image, de la caractéristique d'image de produit utilisée pour représenter des informations de produit de base, et l'exécution d'une comparaison de similarité entre la caractéristique d'image de produit extraite et une caractéristique d'image de produit échantillon pour obtenir des informations de produit de base du produit à interroger ; et
l'exécution d'une interrogation pour obtenir les informations de détail de produit du produit à interroger en utilisant les informations de produit de base ; et
le module de présentation (18) présente (206) les informations de détail de produit.

2. Système selon la revendication 1, dans lequel l'objet en mouvement comprend un être humain ; et/ou
le module de détection de distance (14) comprend un module de mesure de distance par ultrasons ; et/ou
les informations de détail de produit comprennent des informations de commentaire d'un produit à interroger ; et/ou
la zone de photographie comprend la zone de détection ; et/ou
la plage de distance prédéterminée est une plage de distance correspondant à la zone de chevauchement ; et/ou
le module de présentation (18) est un dispositif d'affichage, une distance entre le dispositif d'affichage et une étagère de produit se situe dans une plage spécifiée, le module de photographie est disposé sur le dessus du dispositif d'affichage, et le module de détection de distance est disposé au bas du dispositif d'affichage.

3. Système selon la revendication 1, dans lequel lors de la détection que la distance entre le module de détection de distance et l'objet en mouvement se situe dans la plage de distance prédéterminée, le module de détection de distance (14) envoie un message utilisé pour ordonner l'activation de la photographie au module de photographie (12) ; ou lors de la détection que la distance entre le module de détection de distance et l'objet en mouvement se situe en dehors de la plage de distance prédéterminée, le module de détection de distance (14) envoie un message utilisé pour ordonner la désactivation de la photographie au module de photographie (12).

4. Système selon la revendication 3, dans lequel l'image comprend au moins des données d'image correspondant à deux produits, des données d'image du même produit dans différentes images sont déterminées sur la base d'une zone d'emplacement de produit prédite dans chaque trame d'image, et des informations de produit de base du même produit sont déterminées sur la base d'une quantité de répétitions d'informations de produit de base correspondant à des données d'image du produit dans différentes images.

5. Système selon la revendication 3, dans lequel le module d'interrogation d'informations (16) comprend un module de traitement et un module d'interrogation ;
après la réception du message de notification, le module de traitement obtient l'image photographiée par le module de photographie, prédit la zone d'emplacement de produit du produit à interroger dans l'image sur la base du modèle de positionnement de produit pré-entraîné, et envoie des données d'image de la zone d'emplacement de produit dans l'image au module d'interrogation ; et
le module d'interrogation extrait, à partir des données d'image reçues, la caractéristique d'image de produit utilisée pour représenter des informations de produit de base, et effectue une comparaison de similarité entre la caractéristique d'image de produit extraite et la caractéristique d'image de produit échantillon pour obtenir les informations de produit de base du produit à interroger ; et effectue une interrogation pour obtenir les informations de détail de produit du produit à interroger en utilisant les informations de produit de base, et envoie les informations de détail de produit au module de présentation pour présentation.

6. Procédé d'interrogation d'informations de produit mis en œuvre sur la base du système selon l'une quelconque des revendications 1 à 5, comprenant :
lorsqu'une distance entre un module de détection de distance et un objet en mouvement se situe dans une plage de distance prédéterminée, l'obtention (202) d'une image photographiée par un module de photographie ;
l'exécution (204), en utilisant une caractéristique d'image de produit extraite de l'image, d'une interrogation pour obtenir des informations de détail de produit correspondant à la caractéristique d'image de produit, comprenant :
la prédiction d'une zone d'emplacement de produit d'un produit à interroger dans l'image sur la base d'un modèle de positionnement de produit pré-entraîné, comprenant :
la détermination, à partir d'un résultat de sortie du modèle de positionnement de produit pré-entraîné, sur la base d'une relation d'emplacement entre une zone d'emplacement de produit appartenant à un type de produit du produit à identifier et une zone d'emplacement d'objet appartenant à un type d'objet associé, d'une zone d'emplacement de produit dont la distance par rapport à une zone d'emplacement d'objet associée se situe dans une plage prédéterminée en tant que zone d'emplacement de produit du produit à interroger ;
l'extraction, à partir de la zone d'emplacement de produit dans l'image, de la caractéristique d'image de produit utilisée pour représenter des informations de produit de base, et l'exécution d'une comparaison de similarité entre la caractéristique d'image de produit extraite et une caractéristique d'image de produit échantillon pour obtenir des informations de produit de base du produit à interroger ; et
l'exécution d'une interrogation pour obtenir les informations de détail de produit du produit à interroger en utilisant les informations de produit de base ; et
la présentation (206) des informations de détail de produit.

7. Procédé selon la revendication 6, dans lequel l'image comprend au moins des données d'image correspondant à deux produits, des données d'image du même produit dans différentes images sont déterminées sur la base d'une zone d'emplacement de produit prédite dans chaque trame d'image, et des informations de produit de base du même produit sont déterminées sur la base d'une quantité de répétitions d'informations de produit de base correspondant à des données d'image du produit dans différentes images.

8. Procédé selon la revendication 6, dans lequel les informations de produit de base comprennent au moins une catégorie de produit du produit à interroger et une marque du produit à interroger ; et/ou les informations de détail de produit comprennent des informations de commentaire du produit à interroger.
